# EUROPEAN PATENT SPECIFICATION

(11) **EP 2 842 410 B1**
(45) Date of publication and mention of the grant of the patent: **28.06.2017**
(21) Application number: 14182523.2
(22) Date of filing: 27.08.2014
(51) Int. Cl.: A01F 25/20

(54) **Silage collector and method for collecting silage**
Silagekollektor und Verfahren zum Sammeln von Silage
Collecteur d'ensilage et procédé d'extraction d'ensilage

(30) Priority: 27.08.2013 NL 2011342
(43) Date of publication of application: 04.03.2015
(73) Proprietor: Beheermaatschappij Schuitemaker B.V., 7461 AG Rijssen (NL)
(72) Inventor: Wilmink, Hermanus Gerhardus Joseph, 7461 AG Rijssen (NL)
(74) Representative: V.O.

(56) References cited:
- EP-A1- 0 846 411
- DE-A1-102010 011 288
- FR-A1- 2 596 945
- NL-A- 7 713 100
- NL-C2- 1 001 864

## Description

### FIELD AND BACKGROUND OF THE INVENTION

The invention relates to a silage collector according to the introductory portion of claim 1, to a method for collecting silage according to the introductory portion of claim 14. Such a silage collector and such a silage collecting method are known from DE 10 2010 011 288. This silage collector, which forms a part of a vehicle, has a rotary grinder arranged behind a linear cutter that mills silage off the silage heap towards a conveyor. In the silage collecting head, a transverse conveyer system is arranged between the rotary grinder and a conveyor of the boom carrying the silage collecting head. The transverse conveyer system transfers silage supplied by the rotary grinder laterally from a zone between the operating width of the rotary grinder and the width of the conveyor.

When collecting silage from a heap, it is desired that the quality and storage life of the remaining silage in the heap is affected as little as possible, since this reduces the nutritional value of the plant material.

In EP 1 712 123, a silage collector, also part of a vehicle, is disclosed. A silage collecting head has a cutting board with a cutting blade and discharge means on the inner side thereof for discharging detached silage from the cutting board so that it drops to a gathering receptacle of a corresponding width. The gathering receptacle is arranged stationary near floor height under the silage collecting head. In one example, the receptacle extends over the entire width of the vehicle and the cutting board, whilst a conveyor extending from the gathering receptacle to a transport receptacle has a width of approximately half the width of the gathering receptacle. A cross conveyor in the form of a worm conveyor is disposed in the gathering receptacle for supplying the silage collected in the gathering receptacle to the conveyor in a direction perpendicular to the conveyor via which the silage is transported to the transport receptacle. The silage collecting head is movably connected to the free end of a pivot arm by means of a parallelogram linkage. The linkage comprises two at least substantially parallel rods, from which the collecting head is suspended by means of pivot joints. A steering rod and a steering plate steer the parallelogram linkage upon pivoting movement of the pivot arm from an upper position to the lower position, as a result of which the angle between the collecting head and the pivot arm changes such that the distance from a cutting blade to the pivot axis is smaller in a central position of the pivot arm than in the upper and lower positions of the pivot arm. This means that the cutting path that said cutting blades describe at the upper side and the bottom side of the stock of silage is steeper than a circular path with the pivot axis as the centre thereof. As a result, the silage that is detached from the stock of silage by the cutting board can fall into a gathering receptacle of the device more easily and the detached silage is prevented from dropping onto and accumulating against the lower part of the wall of the stock of silage.

DE 28 53 343 discloses cutting material from the silage heap along essentially a cutting line moved along a cutting trajectory using a circulating cutting chain or a cutter with reciprocally moving cutting element as a cutting head is lowered through a front portion of the silage heap. Behind the cutter a helical rotary cutter is suspended. In operation, the rotary cutter is rotated and mills the silage from behind the cutter upwardly and over the rotary cutter while simultaneously transferring the silage scraped from the heap towards a discharge path of which an upstream end is located adjacent a downstream end of the helical rotary cutter.

EP 2 127 516 discloses a silage collector in which the collecting head is not provided with a linear cutter, but in which for collecting the silage from the silage heap a rotary withdrawing member is equipped with a large number of teeth with a specific shape for withdrawing the silage material from the silage heap without cutting the silage material. The rotary withdrawing member has helical flanges for conveying the withdrawn silage material in axial direction towards a discharge path.

### SUMMARY OF THE INVENTION

It is an object of the present invention to provide an uncomplicated solution that allows retrieving silage from a frontal face of a silage heap with a reduced adverse effect on the quality and storage life of the remaining silage in the heap.

According to the invention, this object is achieved by providing a silage collector according to claim 1. The invention can also be embodied in a method for collecting silage according to claim 14.

Because the pivot axis of the boom is displaceable during collecting, the horizontal distance of the pivot axis to the heap can be varied as the distance of the silage collecting head from a top end of the frontal face of the heap changes, so that a more flat frontal face of the silage heap can be obtained. Thus, exposure of silage adjacent upper and lower portions of the frontal face can be reduced. Moreover, by avoiding that a portion of the frontal face leans over or, optionally, providing that it is slightly slanted backward, the risk of collapsing of the silage heap at its frontal face is reduced. By collecting along a more straight line, the exterior surface area of the frontal face of the silage heap, and accordingly the extent to which the silage is exposed, is reduced, which is advantageous for maintaining the quality of the stored silage.

Particular elaborations and embodiments of the invention are set forth in the dependent claims.

Further features, effects and details of the invention appear from the detailed description and the drawings.

### BRIEF DESCRIPTION OF THE DRAWINGS

Figs. 1 and 2 are schematic side views of a first example of a vehicle with a silage collector according to the invention in different operating condition;
Fig. 3 is a schematic side view of a second example of a silage vehicle according to the invention and a frontal portion of a silage heap;
Fig. 4 is a schematic top plan view of the vehicle according to Fig. 3;
Fig. 5 is a schematic side view of a front portion of a third example of a silage transport vehicle according to the invention; and
Figs. 6-9 are schematic side views of fourth to seventh examples of a silage transport vehicle according to the invention.

### DETAILED DESCRIPTION

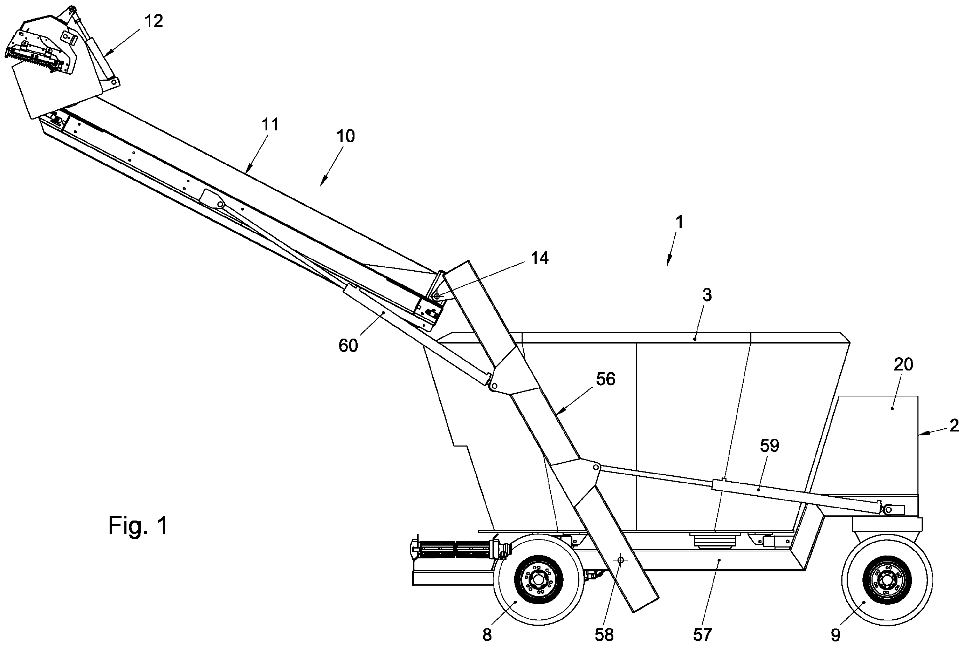

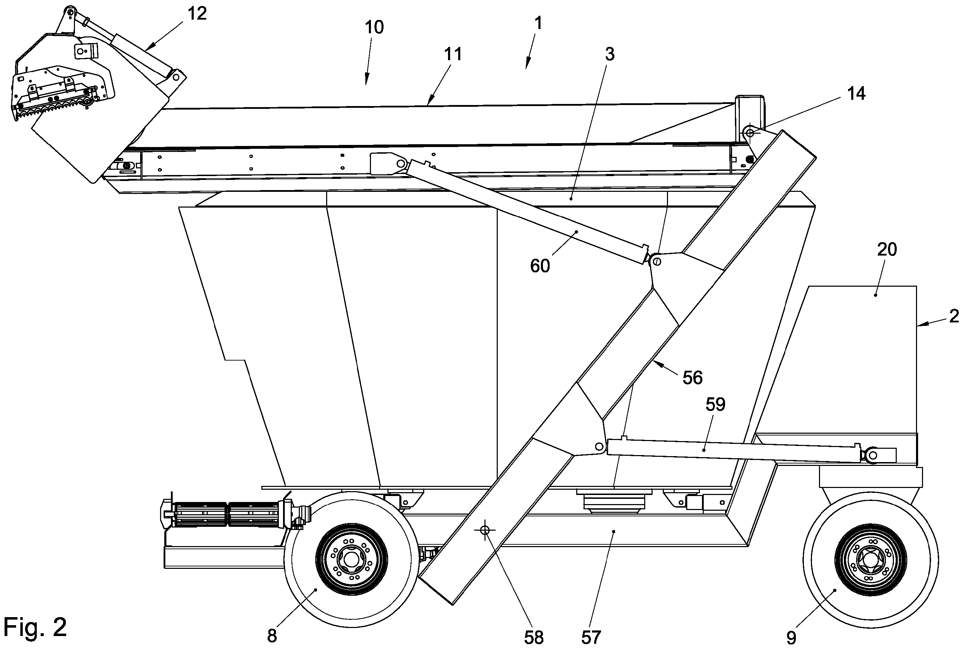

The invention is first described with reference to an example of a silage vehicle 1 according to the invention shown in Figs. 1 and 2. The vehicle 1 according to this example is for collecting and transporting silage and has a silage carrier composed of a vehicle body 2 and a receptacle 3 carried by the vehicle body 2. The receptacle 3 is for receiving and holding silage to be transported. In the receptacle 3, mixing screws are arranged for mixing silage and, if desired, other forage and/or food supplements. The vehicle 1 has wheels 8, 9 coupled to hydraulic hub motors (not shown) and a motor and drive train unit 20 mounted to a chassis 57 of the vehicle body 2.

The vehicle 1 is further equipped with a silage collector 10 composed of a boom 11 carrying a silage collecting head 12 at its free end. The boom 11 is equipped with a silage conveyor inside the boom 11 for conveying silage cut by the silage collecting head 12 from the silage collecting head 12 to the receptacle 3. To that end, a proximal, downstream end of the silage conveyor is, when in operating condition, positioned for discharging supplied silage into the receptacle 3. Thus, the silage supplied along the boom is dropped directly from the silage conveyor of boom into the receptacle. In the present example, the silage conveyor is provided in the form of a circulatable conveyor belt. However, other forms of a conveyor, such as a conveyor screw or an arrangement of brooms or paddles circulatable along the length of the conveyor are also conceivable. Proximally spaced from the silage collecting head 12, the boom 11 is pivotable relative to the vehicle body 2 about a pivot axis 14. Hydraulic cylinders 15 are connected to the vehicle body 2 and to the boom 11 at positions spaced from the pivot axis 14 for driving pivoting movement of the boom 11.

In Fig. 1, the boom 11 to which the silage collecting head 12 is mounted is in an operating position for cutting and collecting silage from a heap while in Fig. 2, the boom 11 is in a retracted position. With the boom in the retracted position, a silage collecting vehicle is compact in driving direction, which is advantageous for manoeuvrability, for instance while driving between the silage heap and locations where silage and optionally other feed is to be delivered, as well as for storage. To allow the boom 11 to be moved between the silage collecting position shown in Fig. 1 and the transport position shown in Fig. 2, the boom 11 is pivotably suspended from boom carrier arms 56. The pivoting axis 14 about which the boom 11 is pivotable is movable back and forth in driving directions of the vehicle 1 (determined by the planes in which its wheels 8, 9 are rotatable) between a silage collecting position at an upper front end of the vehicle as shown in Fig. 1, the proximal end of the boom 11 being positioned such that the silage supplied along the boom is dropped directly from the silage conveyor of boom into the receptacle, and a transport position at an upper rear end of the vehicle as shown in Fig. 2. With the boom pivoting axis 14 in its rearmost portion, the boom 11 extends over substantially the length of the vehicle 1 over the receptacle 3 and projects very little from the vehicle chassis 57 and the receptacle 3 carried thereby. Accordingly, with the boom 11 in the transport position, the vehicle 11 has a relatively short footprint and is easily manoeuvrable even in confined spaces.

The forward and backward movability of the pivoting axis 14 about which the boom 11 is pivotable can also be used to influence the shape of the front face of the silage heap that is formed during cutting and collecting of silage without moving the entire vehicle 1 backward and/or forward as the boom 11 with the collecting head 12 is swung in a vertical plane during cutting and collecting of silage. By slightly moving the pivoting axis 14 backward to a second position from a most forward first position during collecting, as the silage collecting head 12 is moved downwardly from a most upward position, it can be avoided that, after collecting, an upper portion of the frontal face of the silage heap leans forward. Moving the pivoting axis forwardly (i.e. towards the silage heap) as the collecting head 12 is moved downwardly from an approximately horizontal orientation, results in a more straight frontal face that does not or to a lesser extent slants backward towards its bottom end. During these displacements of the pivoting axis between the first position and the second position as well as in the first and second positions, the proximal end of the boom 11 is at all times positioned for causing silage supplied by the conveyor to be deposited directly from the conveyor into the receptacle 3.

A frontal silage heap face that leans over forwardly increases the risk of collapsing of the front face and causes accelerated deterioration of the silage, in particular of the upper front corner portions close to where the top surface and the frontal face of the silage heap meet. Depending on the cohesion of the silage, it may be desired to further reduce the risk of collapsing by providing that the front face is leaning backwardly, for instance over substantially its entire height or over a lower portion of its height only.

For avoiding that a forward leaning frontal face shape is obtained, it can be provided that the pivoting axis is displaced during collecting, such that at least during an upper portion of a cutting trajectory the horizontal distance of the pivoting axis to the heap increases with the distance of the silage collecting head from a top end of the frontal face of the heap.

To straighten the shape of the collecting trajectory, which further reduces exposure of the silage via the external surface area of the frontal face of the heap, it may also be provided that, during a lower portion of the collecting trajectory under the upper portion, the horizontal distance of the pivoting axis to the heap decreases as the distance of the silage cutting knife from a top end of the frontal face of the heap increases.

The relationship between displacement of the pivoting axis in the driving direction and the orientation of the boom is preferably such that the silage is sliced along a straight cutting trajectory. In addition to providing a smallest front end surface over which silage is exposed to the environment, slicing along a straight collecting trajectory allows collecting silage up to closely along a (usually flat) rear wall of a silage bunker, in particular if the collecting trajectory is parallel to the (in most cases vertical) rear wall of a silage bunker. If a non vertical frontal face shape has been cut to avoid collapsing, the frontal face may gradually be shaped towards a flat vertical shape as the vertical rear wall is approached by slicing of successive layers of silage, so that the last silage can nevertheless be cut closely along the flat vertical rear wall.

In the present example, the forward and backward movability of the pivoting axis 14 has been achieved by providing that the boom carrier arms 56 are pivotably mounted to the vehicle body and in this example more specifically to the chassis 57. The boom carrier arms 56 are pivotable about an axis 58 where the boom carrier arms 56 are coupled to the chassis 57, so that an efficient low friction construction is achieved.

For moving the boom carrier arms 56 backward and forward, hydraulic cylinders 59 coupled to the frame 57 of the vehicle body 2 and to the boom carrier arms 56 in positions spaced from the pivoting axis 58 of the boom carrier arms 56 are provided. For pivoting the boom 11 up and down and in and out of its transport position, hydraulic cylinders 60 coupled to the boom 11 and to the boom carrier arms 56 in positions spaced from the pivoting axis 14 of the boom 11 are provided.

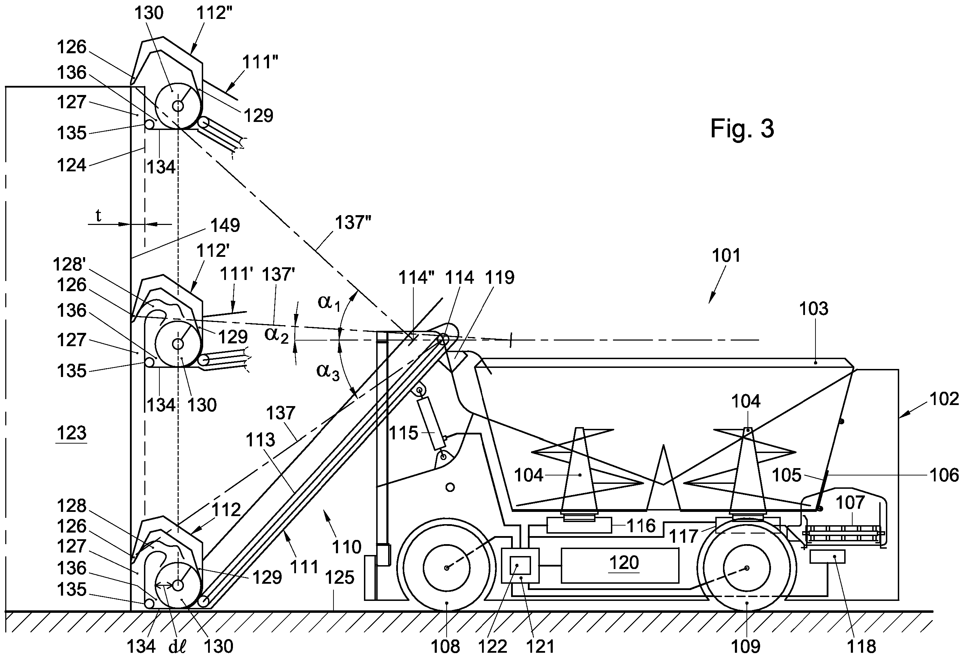

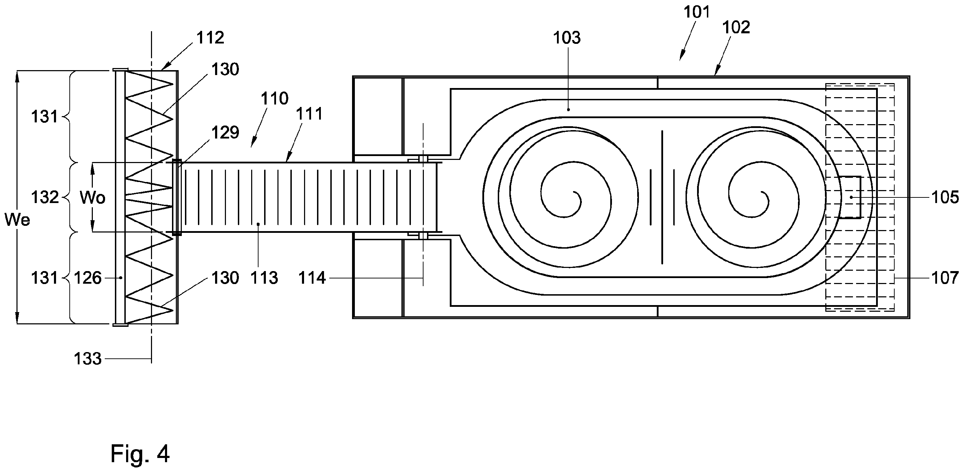

However, also other solutions for providing the forward and backward movability of the pivoting axis between the most forward first operating position and the most backward second operating position of the boom are conceivable. For instance in Figs. 3 and 4 another example of a silage vehicle 101 according to the invention is shown in which the vehicle body 102 is moved backward and forward during silage removal. The vehicle has a vehicle body 102 to which the receptacle 103 is mounted and wheels 108; 109 mounted to the vehicle body 102, which allows the vehicle to drive over a ground surface.

In the example shown in Fig. 3, the boom 111, the collecting head 112, the pivoting axis 114 and a geometrical plane defined by a cutting edge of a linear silage cutter 126 of the collecting head 112 and the pivoting axis 114 are shown in three positions 111, 111', 111"; 112, 112', 112"; 114, 114', 114" and, respectively 137, 137', 137". Parts of the collecting head and the boom in the three positions are designated by identical reference number in each of the three positions.

The receptacle 103 is equipped with screws 104 for mixing silage and optional other feed constituents and for urging food outwardly to a discharge port 105 of the receptacle 103, which can be closed-off by a hatch 106. A feed distribution conveyor 107 is provided for depositing feed to the side of a track along which the vehicle passes. This allows distributing feed from the receptacle 103 along the length of one or more feed barriers as the vehicle 101 is driven along the feed barrier or barriers.

For energizing hub motors of the wheels 108, 109, hydraulic motors 116-119 for driving the mixing screws 104, a distribution conveyor 107, the conveyor 113 of the boom 111 and the hydraulic cylinders 115 for actuating pivoting movement of the boom 111 about the horizontal axis 114, an engine 120 and a hydraulic pump unit 121 coupled to the engine 120 are provided. The pump unit 121 and valves in hydraulic conduits are controlled by a control unit 122. The engine may for instance be a diesel engine. However, in view of the relatively short operating intervals of collecting and distributing silage, it is also possible to provide a battery and/or a contact wire or rail powered electric motor. Power supply may also be achieved by induction. If the vehicle is electrically powered, it can be advantageous to replace some or all the hydraulic motors and actuators by electric motors and actuators.

In Fig. 3, a frontal end portion of a silage heap 123 is shown. The heap 123 has a frontal face 124 and rests on a floor 125 over which the vehicle 101 is drivable.

In the present example, the silage collecting head 112 has a linear silage cutter for cutting off a slice of silage from the heap along a (preferably straight) linear cut in the form of a silage cutting knife 126. However, the linear silage cutter may also be provided in another design, such as a circulating or reciprocally moving chain or an array of cutting discs. A linear silage cutter may also be omitted, for instance in a design in which a rotary silage cutter or grinder (fraise) also performs the function of severing the silage that is collected from the heap.

The silage cutting knife 126 bounds a longitudinal side of an entry passage 127 of the silage collecting head 112 for allowing silage 128 that has been sliced off the silage heap by the silage cutting knife 126 to pass through. The entry passage 127 is elongate and has a width wₑ in the longitudinal direction of the silage cutting knife 126. Furthermore, the silage collecting head 112 has an outlet passage 129 having a width wₒ in the direction of the width wₑ of the entry passage 127, which is smaller than the width wₑ of the entry passage 127.

A lateral conveyor screw 130 of the silage collecting head 112 is oriented along the silage cutting knife 126 from zones 131 of the collecting head 112 aside of the outlet passage 129 to a zone 132 in front of the outlet passage 129, for laterally transporting portions of the sliced silage 128, 128' from the zones 131 of the collecting head 112 aside of the outlet passage 129 towards the outlet passage 129.

In operation, the silage collecting head 112 is moved with vertical directional component along the front side 124 of the silage heap 123 along a path in which the silage cutting knife 126 moves closely behind the frontal face 124 of the silage heap 123, thereby slicing silage 128 off the frontal face 124 of the silage heap 123. In the present example, the silage collecting head is moved from an upper position 112" downwards via an intermediate position 112' to a lowermost position 112. A lowermost portion of the silage at the frontal face 124 of the silage heap 123 that has not been cut by the silage cutting knife 126 when the collecting head 112 has reached its lowermost position abutting against the floor 125, can for instance be collected by pressing the collecting head 112 into the silage, causing the resiliently suspended silage cutting knife 126 to be biased backwardly relative to the conveyor screw 130 and allowing the conveyor screw 130 to scrape silage off the front face 124 of the silage heap 123.

As the silage material is being sliced, sliced silage 128, 128' is received in the collecting head 112 via the entry passage 127. Simultaneously, the conveyor screw 130 laterally displaces sliced silage 128, 128' received in the zones 131 of the silage collecting head 112 to the side of the outlet passage 129 through the silage collecting head 112 towards the outlet passage 129 and both the laterally displaced silage material and silage material 128, 128' that has been cut and received in front of the outlet passage 129 are displaced away from the silage collecting head 112 in a direction transverse to the silage cutting knife 126 by the silage conveyor 113.

Because the silage is laterally transported in and through the silage collecting head by a conveyor screw from outer zones of the silage collecting head to the side of the outlet passage, which is narrower than the inlet passage, on the one hand silage can be cut from the silage heap over a large width, while the sliced silage is presented for transportation away from the silage collecting head over a small width where it can be transferred directly to a relatively narrow, and accordingly low cost, lightweight and compact conveyor. Spillage of silage due to wind or whirling is avoided, because one end of the conveyor along which the silage is transported away from the silage collecting head moves along with the silage collecting head from which the cut silage is received. Thus, the upstream end of the silage transport conveyor is always closely adjacent to the outlet passage of the silage collecting head, so the silage does not have to drop in free fall over a significant distance when transferred from the silage collecting head to the silage conveyor.

Fig. 3 further illustrates an application of the principle of providing that the drive train including the motor 120 and the control unit 121 are arranged for controlling forward and backward displacement of the vehicle body 102, and accordingly of the pivoting axis 114, during pivoting motion of the boom 111. Preferably, displacement of the vehicle body is controlled in accordance with a predetermined relationship between (e.g. as a function of) the changes in the orientation of the boom. However, a different approach, for instance based on monitoring and controlling the horizontal component of movement of the silage collecting head, is also conceivable, for achieving that a more vertical cut, and accordingly a more vertical face, is obtained than if the vehicle body would have been left stationary.

By moving the vehicle body 102 backward and/or forward during pivoting movement of the boom 111, the trajectory along which silage is sliced off the frontal face 124 of the silage heap 123 can be controlled and avoids that such a shape is limited to a circle segment having the pivoting axis 114 of the boom 111 relative to the vehicle body 102 as its centre. This allows to shape the trajectory along which silage is sliced off the frontal face 124 of the silage heap 123 such that parts of the frontal face lean over forwardly to a lesser extent than if the silage heap face is cut to a circle segment shape, or not at all. During collecting, the proximal end of the boom 111 remains positioned for causing silage supplied by the conveyor 113 to be deposited into the receptacle 103. Thus, the silage supplied along the boom 111 is dropped directly from the silage conveyor 113 of boom 111 into the receptacle 103 while the pivoting axis 114 of the boom is in the first position, the second position and any operating position between the first and the second position.

As is illustrated by Fig. 3, the pivoting axis 114" of the boom 111" may be in a first position when the silage collecting head 112" is in its uppermost position, just before starting slicing off a slice 128 of silage from the frontal face 124 of the silage heap 123. Then, as the boom 111' is lowered and the silage cutting knife 126 is slicing off silage material, the vehicle body 2 may be driven backward until the pivoting axis 114' approximately reaches its most rearward position, while the collecting head 112' is approximately in its horizontally most far reaching position designated by reference numeral 112'. As the boom 111 is lowered further and after a plane 137 through the cutting edge of the silage cutting knife 126 and the pivoting axis 114 has passed through a horizontal orientation, the vehicle body 102 is moved forward again until the pivoting axis 114 reaches the position 114 shown in the drawing and the silage collecting head 112 has reached its lowermost position. For achieving a straight vertical collecting trajectory, the backward displacement of the pivoting axis 114 should be such that the horizontal distance of the pivoting axis 114 to a desired vertical cutting plane 149 varies as a function of angle α having the form: cos α x *l*, wherein α is the inclination of the plane 137 through the cutting edge of the silage cutting knife 126 and the pivoting axis 114 relative to the horizontal and *l* is the distance between the cutting edge of the silage cutting knife 126 and the pivoting axis 114.

In the present example, the screw conveyor extends in two zones 131 aside of the outlet passage 129 and has sections on opposite sides of the outlet passage1 29 that have a left-hand and, respectively, a right-hand thread. More specifically, when seen from the vehicle body 102, the left section of the screw conveyor 130 has a right-hand thread and the right section of the screw conveyor 130 has a left-hand thread, so that silage is laterally transported towards the middle of the silage collecting head 112 when the screw conveyor is rotated about its central axis 133 in a sense of rotation in which the side of the screw conveyor 130 facing the silage cutting knife 126 moves downwards.

The silage collecting head 112 further has a longitudinal edge 135 of the entry passage 127 opposite the silage cutting knife 126. The longitudinal edge 135 and the silage cutting knife 126 are positioned such that when the longitudinal edge 135 contacts the frontal face 124 of the silage heap 123, the cutting plane 149 along which the silage cutting knife 126 cuts, and which determines the thickness t at which the silage is sliced off the frontal face 124, is a distance t from the longitudinal edge 135. The distance t is smaller than the depth dl of the empty space between windings of the conveyor screw 130.

Because the silage is sliced off the frontal face of the silage heap at a relatively small thickness t in relation to the depth dl of the empty space between windings of the conveyor screw (smaller than and preferably less than 75% of the depth dl of the empty space), the slice of silage cut off the silage heap is relatively malleable and easily transportable by the conveyor screw smoothly with relatively little further cutting, drawing apart, bruising, mashing or other processing that inflicts damage upon the plant material constituting the silage. In particular, the silage is not whirled and loosened to an extent as occurs when grinding or milling, so wear and tear to which the plant material is exposed are reduced. Thus, damage to the plant material is reduced and the silage remains relatively compact which is favourable for storage life of the collected silage and maintaining its nutritional value. The effective lateral transport of the silage through the collecting head allow slicing the silage off the silage heap over a large width without needing a wide conveyor track, so that in spite of the small cutting depth, silage can be collected at a sufficiently high rate.

The cutting knife 126 is preferably oriented in relation to the cutting plane 149 such that a cutting face of the cutting knife facing the silage heap is parallel to the cutting plane 149 or leaves a clearance angle between the cutting knife 126 and the cutting plane. Thus, the cutting knife 126 presses not or only slightly against the freshly cut frontal face surface of the silage heap, which helps to avoid dislodging silage adjacent that freshly cut frontal face surface.

The silage collecting head 112 further has a guide surface 134 extending from the longitudinal edge 135 of the entry passage 127 opposite the silage cutting knife 126 and leaves a space 136 between the guide surface 134 and an outer contour of rotation of the screw conveyor 130. A portion of that space 136 tapers in axial view in a circumferential sense away from the longitudinal edge 135 of the entry passage 127.

In the tapering space 136 between the guide surface 134 and the screw conveyor contour, silage material that is entrained by the screw conveyor 130 is kneaded and compressed, urged into the space between successive windings of the helical thread of the screw and, at least to a large extent, prevented from rotating along with the screw conveyor 130, so that the silage is effectively transported in the lateral direction towards the outlet passage 129.

During the downwards movement of the collecting head 112 during collecting, the lower edge 135 of the collecting head 112 bounding the silage entry passage 127 opposite the silage cutting knife 126 is moved along and in contact with the frontal face 124 of the silage heap 123, leading the silage cutting knife 126. Thus, also smaller parts of silage separated during collecting and/or during bending and breakage of the slice 128 of silage are, at least to a large extent, prevented from falling down from between the frontal face 124 of the silage heap 123 and the silage collecting head 112, so that essentially none of the sliced silage is lost.

The lower edge 135 of the collecting head 112 bounding the silage entry passage 127 opposite the silage cutting knife 126 is formed by a roller, so that it can move easily over the frontal face 124 of the silage heap 123 with little or no scraping of silage off the frontal face 124 of the silage heap 123.

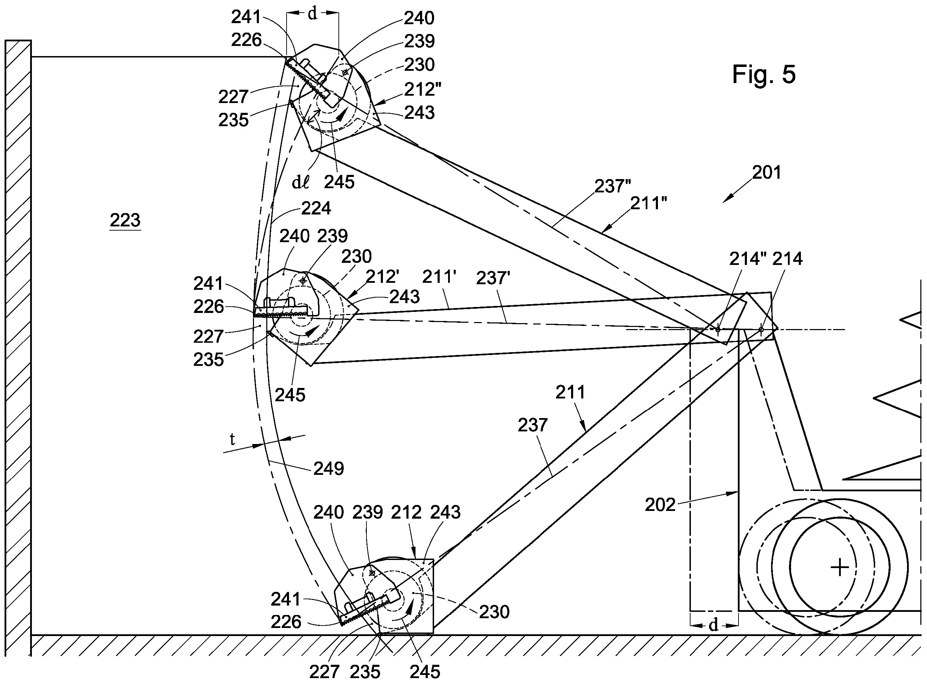

In Fig. 5, a third example of a silage vehicle 201 according to the invention is shown.

In this example, the movement of the pivoting axis 214 in driving direction as the silage collecting head is moved from a starting position 212" via an intermediate position 212' to a lowermost position by pivoting the boom 211 about its pivoting axis 214 is controlled in a more simple manner by only providing for rearward movement of the pivoting axis 214 over a distance d approximately until a plane 237 through the cutting edge of the silage cutting knife 226 and the pivoting axis 214, and 214" reaches a horizontal orientation, which reduces the extent to which an upper portion of the cutting plane 249, which determines the shape of the frontal face 224 of the silage heap 223 after collecting, leans forward after collecting. Depending on the coherence of the silage, this may be sufficient for avoiding collapsing of portions of the frontal face 224 of the silage heap 223. The forward and backward movement of the pivoting axis 214 is again achieved by moving the vehicle body 202 back and forth.

The longitudinal edge of the entry passage opposite the silage cutting knife 226 is formed by a lip 235 that is held in contact with the frontal face 224 of the silage heap 223 so that the lower end of the entry passage 227 substantially seals off against the frontal face 224 of the silage heap 223 for preventing loose silage from dropping down.

As can be seen from the successive positions of the silage cutting knife 226 in the successive positions 212", 212', 212 of the silage collecting head, the silage cutting knife 226 is displaceable, in operation, relative to the longitudinal edge 235 opposite the silage cutting knife 226 in a direction perpendicular to the longitudinal direction of the entry passage 227. This allows the sliced off silage to be of a relatively constant thickness from irrespective whether it has been sliced off a top or a bottom portion of the silage heap.

The silage cutting knife 226 is displaceable by pivoting relative to the opposite edge 235 of the entry passage 227 about a pivot axis 239 oriented in the longitudinal direction 238 of the entry passage 227. To this end, the silage cutting knife 226 is mounted to a hood 240 that is pivotable about the pivot axis 239. The silage cutting knife 226 is of a type known as such, which is composed of two cutting blades with serrated edges that are drivable to move back and forth in an oscillating manner relative to each other in the longitudinal direction. To also separate a slice 218 of silage from the silage heap 223 along its lateral sides, the hood 240 also carries side knives 241, each composed of two cutting blades with serrated edges that are drivable to move back and forth in an oscillating manner relative to each other in the longitudinal direction of the respective side cutting knife 241. In the present example, the side knives 241 are relatively long, so that also silage projecting relatively far from the face of the silage heap is reliably cut. However, the side knives may also be shorter, but preferably have a cutting depth matching or slightly exceeding the maximum slice thickness. Since the hood screens off the internal space of the silage collecting head 212, even under very windy conditions and during processing of relatively dry and loose silage, spillage of silage is effectively counteracted. Instead of by reciprocating cutting blades, the side knives may also be provided in a different form, such as in the form of rotating cutting disks or in the form of circulating cutting chains or wires.

For changing the orientation of the hood 240 during silage collecting, a hydraulic cylinder (not shown) is provided of which one end is coupled to the hood 240 and the other end is coupled to a fixed part 243 of the silage collecting head 212.

Since the opposite edge 235 of the entry passage 227 is positioned relative to the conveyor screw 230 such that, during silage collecting, the opposite edge 235 is closer to the silage heap 223 than the conveyor screw 230, the conveyor screw 230 does not reach beyond the frontal face 224 of the silage heap 223 and can only engage silage that has been sliced off the silage heap by the cutting knife 226. Thus, silage is not scraped off the silage heap directly by the conveyor screw, so the silage material is subjected to relatively little strain.

The screw conveyor 230 rotates in a sense of rotation 245 so that a segment of the screw conveyor 230 facing the silage cutting knife moves down in the cutting direction of the silage cutting knife 226. As in the present example, the screw conveyor 230 preferably has projections, such as teeth (not shown), for instance distributed over the circumference of its outer edge or edges at an angular pitch of 90° to 180°. These projections ensure that the sliced silage is initially entrained to some extent in circumferential sense of the screw conveyor, so that it is urged into the spacing(s) between successive windings of helical thread(s) of the screw conveyor. Between a guide surface extending from the edge bounding the entry passage opposite the silage cutting knife 226 and the outer rotational contour of the screw conveyor 230, a tapering space is left in which the sliced silage that is entrained by the conveyor screw is gradually compressed and caused to be effectively entrained by the screw conveyor 230 but also, to some extent, refrained from circulating along with the rotation of the screw conveyor 230. Thus, silage cut and deflected in the zones to the side of the outlet passage 229 is effectively transported in axial direction of screw conveyor 230 towards the outlet passage 229. When laterally transported silage reaches the zone in front of the outlet passage 229, it is expelled from the silage collecting head 212 in a stream together with silage cut and deflected in the zone in front of the outlet passage 229. The stream has a width equal to or smaller than the width of the silage conveyor 213, which is substantially narrower than the entry passage 227 of the silage collecting head 227. Accordingly, silage can be sliced off the frontal face 224 of the silage heap 223 over a large width, yet be transported from the silage collecting head 212 to the receptacle of the vehicle body 202 in a relatively narrow stream, with very little or no spillage and with very little damage to the plant material in the silage.

For effectively driving displacement of the silage while avoiding damaging the plant material in the silage (which reduces its nutritious contents and storage life), the screw conveyor preferably rotates at most at 75 rpm and more preferably at less than 60 rpm, while the silage conveyor preferably moves at a speed higher, and more preferably at least 25% higher than the circumferential velocity of the screw conveyor.

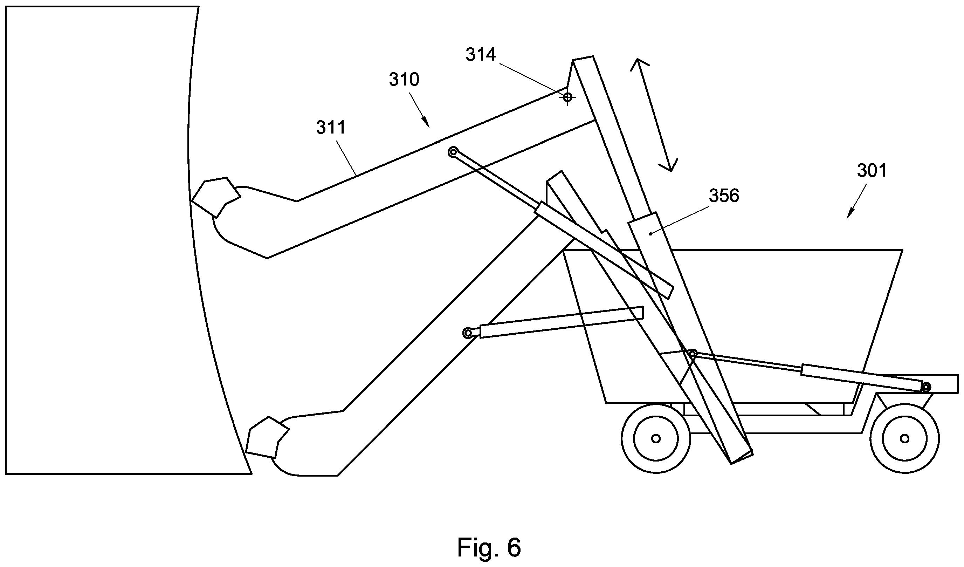

The silage collector 310 of the vehicle 301 shown in Fig. 6 is a variant of the silage collector 10 shown in Figs. 1 and 2. The silage collector 310 has carrier arms 356 extendable and retractable between a long and a short configuration. This allows guided displacement of the pivoting axis 314 about which the boom 311 is pivotable relative to the carrier arms 356 further especially in vertical direction. In turn, this enables collecting silage from a higher silage heap or to provide a silage collector with a shorter (and accordingly lighter and more easily manoeuvrable) boom 311 for collecting silage from a silage heap of a given height.

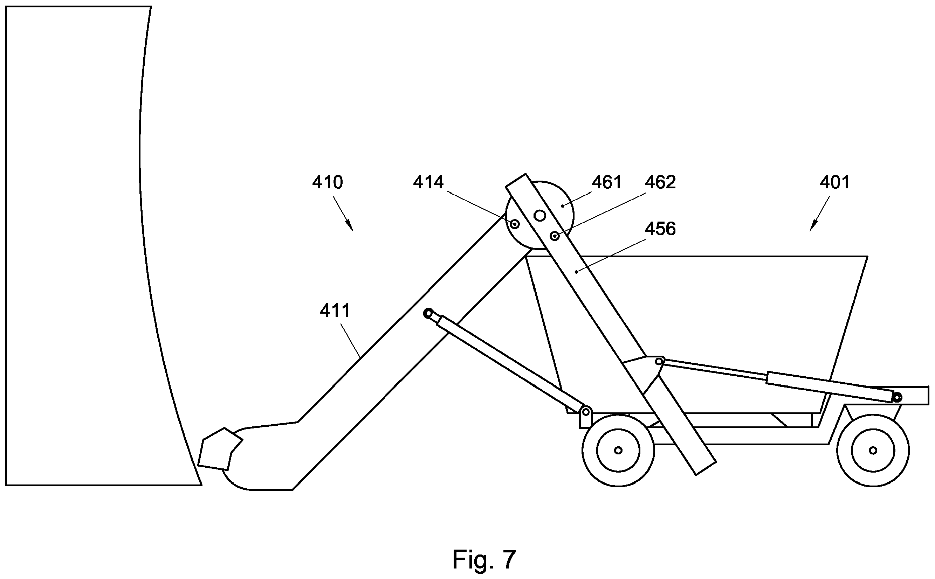

In the silage collector 410 of the vehicle 401 shown in Fig. 7, additional displacement of the pivot axis 414 about which the boom 411 is pivotable relative to the carrier arms 456 is made possible by attaching the boom to intermediate bodies 461 that are pivotable relative to the carrier arms 456 about axes 462 spaced from the pivot axis 414. Also this embodiment enables collecting silage from a higher silage heap or to provide a silage collector with a shorter (and accordingly lighter and more easily manoeuvrable) boom 411 for collecting silage from a silage heap of a given height. In this example, the carrier arms 456 are pivotably suspended as well. It is also possible to provide that the carrier arms are fixed relative to the vehicle body.

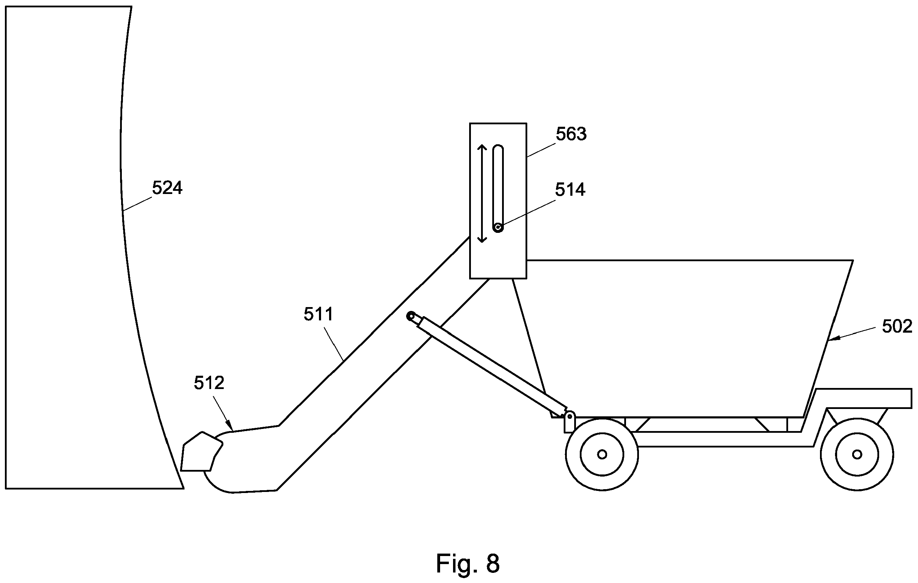

In the embodiment shown in Fig. 8, the pivot axis 514 about which the boom 511 is pivotable is guided by a guide member 563 for displacement relative to the vehicle body 502 in vertical direction only. The vertical displacement of the pivoting axis 514 can be driven by means of hydraulic cylinders (not shown). Vertical displacement of the pivoting axis 514 allows to increase the vertical reach of the boom 511 and to effect a given vertical displacement of the silage collecting head 512 with a pivoting movement of the boom 511 over a relatively small angle. Thus, silage can be collected from a relatively high heap and/or with a relatively short boom 511 and/or a relatively straight frontal face 524 can be obtained. The guide member may be pivotable from a position as shown to a position in which the guide path is essentially horizontal.

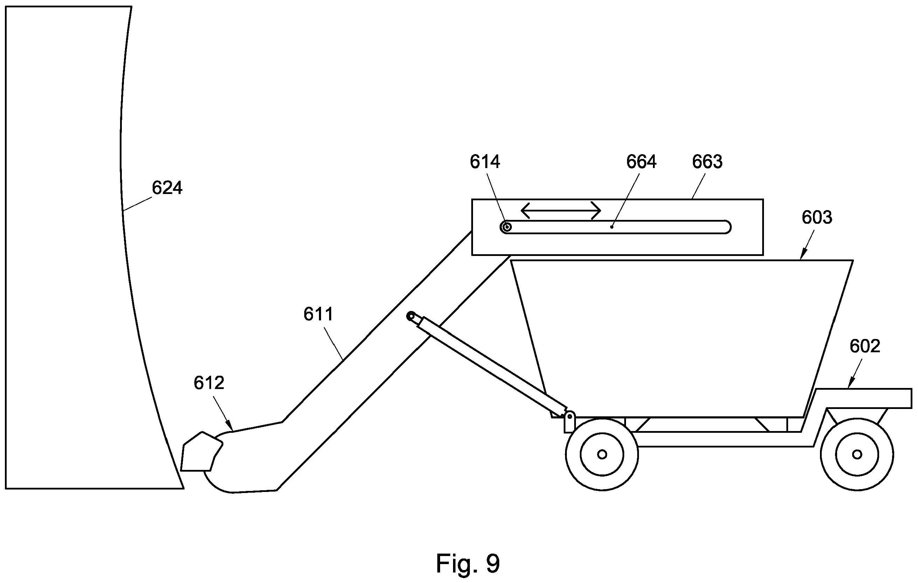

In the embodiment shown in Fig. 9, the pivot axis 614 about which the boom 611 is pivotable is guided by a guide member 663 for displacement relative to the vehicle body 602 in horizontal direction only. The horizontal displacement of the pivoting axis 614 can be driven by means of hydraulic cylinders (not shown). Horizontal displacement of the pivoting axis 614 allows obtaining a flatter frontal silage heap face 624 by compensating for forward and backward displacement of the silage collecting head 612 as the silage collecting head moves from the top to the bottom of the silage heap or back. In the present example, the guide member has a guide track 664 that extends over a length about equal to the length of the boom 611. This feature allows to retract the boom 611 to a transport position on top of the receptacle 603, generally extending from one end of the receptacle 603 or vehicle body 602 to the other end of the receptacle 603 or vehicle body 602. Thus, the overall length of the vehicle 601 in transport condition is reduced and manoeuvring and storage are facilitated.

While several examples of silage collectors according to the invention have been shown and described, within the framework of the present invention many other embodiments are conceivable. For instance, in all the examples, the silage collector is part of or formed by a vehicle. However, the silage collector may also be of a stationary or semi-stationary type that remains in a fixed position at a silage bunker or is only moveable between positions adjacent a silage bunker.

## Claims

1. A silage collector comprising:
a silage collecting head (12; 112; 212; 512; 612) for collecting silage from a heap (123; 223),
a silage carrier including a receptacle (3; 103; 203; 603) for holding a quantity of collected silage;
a boom (11; 111; 211; 311; 411; 511; 611) having a proximal end and a distal end, wherein the boom is mounted to the silage carrier at or near the proximal end of the boom, the silage collecting head is mounted to the distal end of the boom, a silage conveyor (113) extends from the distal end to the proximal end of the boom (11; 111; 211; 311; 411; 511; 611) for conveying silage from the silage collecting head towards the receptacle (3; 103; 203; 603), the boom is connected to the silage carrier so as to be pivotable about a horizontal pivoting axis (14; 114; 214; 314; 414; 514; 614) transverse to the boom at or near the proximal end of the boom, and the proximal end of the boom is positioned for causing silage supplied by the conveyor (113) to be deposited into the receptacle (3; 103; 203; 603);
**characterized in that** the silage collector is arranged for displacing the pivoting axis (14; 114; 214; 314; 414; 514; 614) during collecting between a first position and a second position, the proximal end of the boom (11; 111; 211; 311; 411; 511; 611) being positioned for causing silage supplied by the conveyor (113) to be deposited into the receptacle (3; 103; 203; 603) in both the first position and the second position.

2. A silage collector according to claim 1, wherein the proximal end of the boom (11; 111; 211; 311; 411; 511; 611) is positioned for causing silage supplied by the conveyor (113) to be deposited into the receptacle (3; 103; 203; 603) in any position between the first position and the second position.

3. A silage collector according to claim 1 or 2, wherein the silage collector is arranged for displacing the pivoting axis (14; 114; 214; 314; 414; 614) during collecting in a direction perpendicular to the pivot axis (14; 114; 214; 314; 414; 614) and with a horizontal directional component.

4. A silage collector according to any of the preceding claims, wherein the silage collector is arranged for displacing the pivoting axis (14; 114; 214; 314; 414; 514) during collecting in a direction perpendicular to the pivot axis (14; 114; 214; 314; 414; 514) and with a vertical directional component.

5. A silage collector according to any of the preceding claims, wherein the silage collector is arranged for displacing the pivoting axis (14; 314; 414; 514; 614) during collecting relative to the silage carrier.

6. A silage collector according to claim 5, wherein the boom (11; 311; 411) is pivotably mounted to a boom support (56; 356; 456, 461) that is movable between a first boom support position in which the pivot axis (14; 314; 414) is in said first position and a second boom support position in which the pivot (14; 314; 414) axis is in said second position.

7. A silage collector according to claim 6, wherein the boom support is pivotably mounted at or near its proximal end to a frame (2) of the silage carrier and wherein the pivot axis (14; 314; 414) is located at or near a distal end of the boom support (56; 356; 456, 461).

8. A silage collector according to any of the preceding claims, further comprising a boom support (563; 663) having a guide extending in a longitudinal direction for guiding displacement of the pivot axis (514; 614) in said longitudinal direction along said guide (563; 663).

9. A silage collector according to claim 7, wherein the boom support (356) is extendable and retractable between a long and a short configuration.

10. A silage collector according to any of the preceding claims, wherein the pivoting axis (14; 314; 414; 614) is further movable relative to the silage carrier to a third position in which the boom (11; 311; 411; 611) is in a storage position retracted from its operating position, the pivot axis (14; 314; 414; 614) being located above an end portion of the receptacle (3; 603) opposite of a distal end portion of the boom (11; 311; 411; 611).

11. A silage collector according to any of the preceding claims, wherein the silage collector is arranged for displacing the pivoting axis (114; 214) during collecting together with the silage carrier.

12. A silage collector according to any of the preceding claims, wherein the silage carrier further comprises a vehicle body (2; 102; 202; 502; 602) to which the receptacle (3; 103; 203; 603) is mounted and wheels (8, 9; 108; 109) mounted to the vehicle body (2; 102; 202; 502; 602) for allowing the vehicle to drive over a ground surface, and a drive train including a motor (120) coupled to at least one of said wheels (108; 109) and a control unit (122) arranged for controlling forward and backward rotation of said at least one of said wheels (108; 109) for forward and backward displacement of the vehicle body (102; 202).

13. A silage collector according to any of the preceding claims, further comprising a control unit (122) arranged for controlling said displacement of the pivoting axis (14; 114; 214; 314; 414; 514; 614) during pivoting motion of the boom (11; 111; 211; 311; 411; 511; 611), for adjusting the position of the pivoting axis as the orientation of the boom changes, such that during collecting along a lower portion of the collecting trajectory (149; 249), the distance of the pivoting axis to the heap (123; 223) decreases with the distance of the silage collecting head (12; 112; 212; 512; 612) from a top end of the frontal face of the heap.

14. A method for collecting silage or hay from a frontal face of a silage heap (123; 223), comprising:
moving a silage collecting head (12; 112; 212; 512; 612) with a vertical directional component along a frontal face (124; 224; 624) of the heap (123; 223) by pivoting a boom (11; 111; 211; 311; 411; 511; 611) carrying the silage collecting head at its distal end about a horizontal pivot axis (14; 114; 214; 314; 414; 514; 614) transverse to the boom at or near a proximal end of the boom, thereby collecting silage off the frontal face of the heap; and
as the silage material is being cut:
- receiving cut silage in the silage collecting head;
- urging received cut silage from the silage collecting head to a silage conveyor (113) extending in longitudinal direction in or along the boom; and
- the silage conveyor (113) displacing the cut silage away from the silage collecting head and supplying the cut silage to a receptacle (3; 103; 203; 603);
**characterized by** displacing the pivoting axis (14; 114; 214; 314; 414; 514; 614) during collecting between a first position and a second position, while silage supplied by the conveyor (113) is being deposited into the receptacle (3; 103; 203; 603).

15. A method according to claim 14, wherein the distance of the pivoting axis (14; 114; 214; 314; 414; 514; 614) to the heap (123; 223) increases and decreases in accordance with a predetermined relationship with the orientation of the boom (11; 111; 211; 311; 411; 511; 611).

## Patentansprüche

1. Silagekollektor, umfassend:
einen Silagesammelkopf (12; 112; 212; 512; 612) zum Sammeln von Silage von einem Haufen (123; 223),
einen Silageträger, einschließlich eines Behältnisses (3; 103; 203; 603) zum Aufnehmen einer Menge gesammelter Silage;
einen Ausleger (11; 111; 211; 311; 411; 511; 611) mit einem proximalen Ende und einem distalen Ende, wobei der Ausleger an dem Silageträger an oder nahe dem proximalen Ende des Auslegers montiert ist, der Silagesammelkopf an dem distalen Ende des Auslegers montiert ist, ein Silageförderer (113) von dem distalen Ende zu dem proximalen Ende des Auslegers (11; 111; 211; 311; 411; 511; 611) verläuft, um Silage von dem Silagesammelkopf zu dem Behältnis (3; 103; 203; 603) zu befördern, der Ausleger mit dem Silageträger verbunden ist, um drehbar um eine horizontale Drehachse (14; 114, 214, 314, 414, 514, 614) quer zu dem Ausleger an oder nahe dem proximalen Ende des Auslegers zu sein, und das proximale Ende des Auslegres positioniert ist, um die von dem Förderer (113) zugeführte Silage in dem Behältnis (3; 103; 203; 603) ablegen zu lassen;
**dadurch gekennzeichnet, dass** der Silagekollektor angeordnet ist, um die Drehachse (14; 114; 214; 314; 414; 514; 614) während des Sammelns zwischen einer ersten Position und einer zweiten Position zu verschieben, wobei das proximale Ende des Auslegers (11; 111; 211; 311; 411; 511; 611) positioniert ist, um die von dem Förderer (113) zugeführte Silage in dem Behältnis (3; 103; 203; 603) in sowohl der ersten als auch der zweiten Position ablegen zu lassen.

2. Silagekollektor nach Anspruch 1, wobei das proximale Ende des Auslegers (11; 111; 211; 311; 411; 511; 611) positioniert ist, um vom Förderer (113) zugeführte Silage in dem Behältnis (3; 103; 203; 603) in einer beliebigen Position zwischen der ersten Position und der zweiten Position ablegen zu lassen.

3. Silagekollektor nach Anspruch 1 oder 2, wobei der Silagekollektor angeordnet ist, um die Drehachse (14; 114; 214; 314; 414; 614) während des Sammelns in eine Richtung lotrecht zu der Drehachse (14; 114; 214; 314; 414; 614) und mit einer horizontalen Richtungskomponente zu verschieben.

4. Silagekollektor nach einem der vorhergehenden Ansprüche, wobei der Silagekollektor angeordnet ist, um die Drehachse (14; 114; 214; 314; 414; 514) während des Sammelns in einer Richtung lotrecht zu der Drehachse (14; 114; 214; 314; 414; 514) und mit einer vertikalen Richtungskomponente zu verschieben.

5. Silagekollektor nach einem der vorhergehenden Ansprüche, wobei der Silagekollektor angeordnet ist, die Drehachse (14; 314; 414; 514; 614) während des Sammelns in Bezug auf den Silageträger zu verschieben.

6. Silagekollektor nach Anspruch 5, wobei der Ausleger (11; 311; 411) drehbar montiert ist an einer Auslegerstütze (56; 356; 456, 461), die zwischen einer ersten Auslegerstützposition, in der die Drehachse (14; 314; 414) in der ersten Position ist, und einer zweiten Auslegerstützposition, in der die Drehachse (14; 314; 414) in der zweiten Position ist, beweglich ist.

7. Silagekollektor nach Anspruch 6, wobei die Auslegerstütze drehbar an oder nahe ihrem proximalen Ende an einem Rahmen (2) des Silageträgers montiert ist und wobei sich die Drehachse (14; 314; 414) an oder nahe einem distalen Ende der Auslegerstütze (56; 356; 456; 461) befindet.

8. Silagekollektor nach einem der vorhergehenden Ansprüche, ferner umfassend eine Auslegerstütze (563; 663) mit einer Führung, verlaufend in einer Längsrichtung zum Führen der Verschiebung der Drehachse (514; 614) in der Längsrichtung entlang der Führung (563; 663).

9. Silagekollektor nach Anspruch 7, wobei die Auslegerstütze (356) zwischen einer langen und einer kurzen Konfiguration ausziehbar und zurückziehbar ist.

10. Silagekollektor nach einem der vorhergehenden Ansprüche, wobei die Drehachse (14; 314; 414; 614) ferner in Bezug auf den Silageträger zu einer dritten Position beweglich ist, in welcher der Ausleger (11; 311; 411; 611) in einer Abstellposition, zurückgezogen von seiner Betriebsposition ist, wobei sich die Drehachse (14; 314; 414; 614) über einem Endabschnitt des Behältnisses (3; 603) gegenüber einem distalen Endabschnitt des Auslegers (11; 311; 411; 611) befindet.

11. Silagekollektor nach einem der vorhergehenden Ansprüche, wobei der Silagekollektor angeordnet ist, um die Drehachse (114; 214) während des Sammelns zusammen mit dem Silageträger zu verschieben.

12. Silagekollektor nach einem der vorhergehenden Ansprüche, wobei der Silageträger ferner einen Fahrzeugkörper (2; 102; 202; 502; 602), an dem das Behältnis (3; 103; 203; 603) montiert ist, und Räder (8, 9; 108; 109), die an dem Fahrzeugkörper (2; 102; 202; 502; 602) montiert sind, umfasst, um es dem Fahrzeug zu ermöglichen, über eine Bodenoberfläche zu fahren, und einen Antriebsstrang einschließlich eines Motors (120), gekoppelt an mindestens eines der Räder (108; 109) und eine Steuereinheit (122), angeordnet zum Steuern der Vorwärts- und Rückwärtsrotation des mindestens einen der Räder (108; 109) zur Vorwärts- und Rückwärtsverschiebung des Fahrzeugkörpers (102; 202).

13. Silagekollektor nach einem der vorhergehenden Ansprüche, ferner umfassend eine Steuereinheit (122), angeordnet zum Steuern der Verschiebung der Drehachse (14; 114; 214; 314; 414; 514; 614) während der Drehbewegung des Auslegers (11; 111; 211; 311; 411; 511; 611) zum Einstellen der Position der Drehachse beim Ändern der Ausrichtung des Auslegers, sodass während des Sammelns entlang eines unteren Abschnitts der Sammelstrecke (149; 249) der Abstand der Drehachse zu dem Haufen (123; 223) mit dem Abstand des Silagesammelkopfes (12; 112; 212; 512; 612) von einem oberen Ende der Vorderseite des Haufens abnimmt.

14. Verfahren zum Sammeln von Silage oder Heu von einer Vorderseite eines Silagehaufens (123; 223), umfassend:
das Bewegen eines Silagesammelkopfes (12; 112; 212; 512; 612) mit einer vertikalen Richtungskomponente entlang einer Vorderseite (124; 224; 624) des Haufens (123; 223) durch Drehen eines Auslegers (11; 111; 211; 311; 411; 511; 611), der den Silagesammelkopf an seinem distalen Ende trägt, um eine horizontale Drehachse (14; 114; 214; 314; 414; 514; 614) quer zu dem Ausleger an oder nahe einem proximalen Ende des Auslegers, um dadurch Silage von der Vorderseite des Haufens zu sammeln; und
während das Silagematerial geschnitten wird:
- die geschnittene Silage in dem Silagesammelkopf aufzunehmen
- die aufgenommene geschnittene Silage von dem Silagesammelkopf zu einem Silageförderer (113), der in Längsrichtung in oder entlang des Auslegers verläuft, zu zwingen; und
- die geschnittene Silage durch den Silageförderer (113) weg von dem Silagesammelkopf zu verschieben und die geschnittene Silage einem Behältnis (3; 103; 203; 603) zuzuführen;
**gekennzeichnet durch** Verschieben der Drehachse (14; 114; 214; 314; 414; 514; 614) während des Sammelns zwischen einer ersten Position und einer zweiten Position, während Silage, zugeführt von dem Förderer (113) in dem Behältnis (3; 103; 203; 603) abgelegt wird.

15. Verfahren nach Anspruch 14, wobei der Abstand der Drehachse (14; 114; 214; 314; 414; 514; 614) zu dem Haufen (123; 223) entsprechend einer vorbestimmten Beziehung mit der Ausrichtung des Auslegers (11; 111; 211; 311; 411; 511; 611) zunimmt und abnimmt.

## Revendications

1. Collecteur d'ensilage comprenant :
une tête de collecte d'ensilage (12 ; 112 ; 212 ; 512 ; 612) pour collecter l'ensilage d'un tas (123 ; 223),
un support d'ensilage comprenant un réceptacle (3 ; 103 ; 203 ; 603) pour contenir une quantité d'ensilage collecté ;
une flèche (11 ; 111 ; 211 ; 311 ; 411 ; 511 ; 611) ayant une extrémité proximale et une extrémité distale, dans lequel la flèche est montée sur le support d'ensilage au niveau de ou à proximité de l'extrémité proximale de la flèche, la tête de collecte d'ensilage est montée sur l'extrémité distale de la flèche, un transporteur d'ensilage (113) s'étend à partir de l'extrémité distale jusqu'à l'extrémité proximale de la flèche (11 ; 111 ; 211 ; 311 ; 411 ; 511 ; 611) pour transporter l'ensilage de la tête de collecte d'ensilage vers le réceptacle (3 ; 103 ; 203 ; 603), la flèche est raccordée au support d'ensilage afin de pouvoir pivoter autour d'un axe de pivotement horizontal (14 ; 114 ; 214 ; 314 ; 414 ; 514 ; 614) transversal par rapport à la flèche au niveau de ou à proximité de l'extrémité proximale de la flèche, et l'extrémité proximale de la flèche est positionnée afin que l'ensilage fourni par le transporteur (113) soit déposé dans le réceptacle (3 ; 103 ; 203 ; 603) ;
**caractérisé en ce que** le collecteur d'ensilage est agencé pour déplacer l'axe de pivotement (14 ; 114 ; 214 ; 314 ; 414 ; 514 ; 614) pendant la collecte entre une première position et une deuxième position, l'extrémité proximale de la flèche (11 ; 111 ; 211 ; 311 ; 411 ; 511 ; 611) étant positionnée afin que l'ensilage fourni par le transporteur (113) soit déposé dans le réceptacle (3 ; 103 ; 203 ; 603) à la fois dans la première position et dans la deuxième position.

2. Collecteur d'ensilage selon la revendication 1, dans lequel l'extrémité proximale de la flèche (11 ; 111 ; 211 ; 311 ; 411 ; 511 ; 611) est positionnée afin que l'ensilage fourni par le transporteur (113) soit déposé dans le réceptacle (3 ; 103 ; 203 ; 603) dans n'importe quelle position entre la première position et la deuxième position.

3. Collecteur d'ensilage selon la revendication 1 ou 2, dans lequel le collecteur d'ensilage est agencé pour déplacer l'axe de pivotement (14 ; 114 ; 214 ; 314 ; 414 ; 614) pendant la collecte dans une direction perpendiculaire à l'axe du pivot (14 ; 114 ; 214 ; 314 ; 414 ; 614) et avec une composante de direction horizontale.

4. Collecteur d'ensilage selon l'une quelconque des revendications précédentes, dans lequel le collecteur d'ensilage est agencé pour déplacer l'axe de pivotement (14 ; 114 ; 214 ; 314 ; 414 ; 514) pendant la collecte dans une direction perpendiculaire à l'axe du pivot (14 ; 114 ; 214 ; 314 ; 414 ; 514) et avec une composante de direction verticale.

5. Collecteur d'ensilage selon l'une quelconque des revendications précédentes, dans lequel le collecteur d'ensilage est agencé pour déplacer l'axe de pivotement (14 ; 314 ; 414 ; 514 ; 614) pendant la collecte par rapport au support d'ensilage.

6. Collecteur d'ensilage selon la revendication 5, dans lequel la flèche (11 ; 311 ; 411) est montée de manière pivotante sur un support de flèche (56 ; 356 ; 456, 461) qui est mobile entre une première position de support de flèche dans laquelle l'axe du pivot (14 ; 314 ; 414) est dans ladite première position et une deuxième position de support de flèche dans laquelle l'axe du pivot (14 ; 314 ; 414) est dans ladite deuxième position.

7. Collecteur d'ensilage selon la revendication 6, dans lequel le support de flèche est monté de manière pivotante au niveau ou à proximité de son extrémité proximale, sur un bâti (2) du support d'ensilage et dans lequel l'axe du pivot (14 ; 314 ; 414) est positionné au niveau de ou à proximité d'une extrémité distale du support de flèche (56 ; 356 ; 456, 461).

8. Collecteur d'ensilage selon l'une quelconque des revendications précédentes, comprenant en outre un support de flèche (563 ; 663) ayant un guide s'étendant dans une direction longitudinale pour guider le déplacement de l'axe du pivot (514 ; 614) dans ladite direction longitudinale le long dudit guide (563 ; 663).

9. Collecteur d'ensilage selon la revendication 7, dans lequel le support de flèche (356) est extensible et rétractable entre une configuration longue et une configuration courte.

10. Collecteur d'ensilage selon l'une quelconque des revendications précédentes, dans lequel l'axe de pivotement (14 ; 314 ; 414 ; 614) est en outre mobile par rapport au support d'ensilage dans une troisième position dans laquelle la flèche (11 ; 311 ; 411 ; 611) est dans une position de stockage rétractée par rapport à sa position de fonctionnement, l'axe du pivot (14 ; 314 ; 414 ; 614) étant positionné au-dessus d'une partie d'extrémité du réceptacle (3 ; 603) opposée à une partie d'extrémité distale de la flèche (11 ; 311 ; 411 ; 611).

11. Collecteur d'ensilage selon l'une quelconque des revendications précédentes, dans lequel le collecteur d'ensilage est agencé pour déplacer l'axe de pivotement (114; 214) pendant la collecte conjointement avec le support d'ensilage.

12. Collecteur d'ensilage selon l'une quelconque des revendications précédentes, dans lequel le support d'ensilage comprend en outre un corps de véhicule (2 ; 102 ; 202 ; 502 ; 602) sur lequel le réceptacle (3 ; 103 ; 203 ; 603) est monté et des roues (8, 9 ; 108 ; 109) montées sur le corps de véhicule (2 ; 102 ; 202 ; 502 ; 602) pour permettre au véhicule de rouler sur une surface de terrain, et un système de traction comprenant un moteur (120) couplé à au moins l'une desdites roues (108 ; 109) et une unité de commande (122) agencée pour commander la rotation vers l'avant et vers l'arrière de ladite au moins une desdites roues (108 ; 109) pour le déplacement en marche avant et en marche arrière du corps de véhicule (102 ; 202).

13. Collecteur d'ensilage selon l'une quelconque des revendications précédentes, comprenant en outre une unité de commande (122) agencée pour commander ledit déplacement de l'axe de pivotement (14 ; 114 ; 214 ; 314 ; 414 ; 514 ; 614) pendant le déplacement pivotant de la flèche (11 ; 111 ; 211 ; 311 ; 411 ; 511 ; 611) pour ajuster la position de l'axe de pivotement au fur et à mesure que l'orientation de la flèche change, de sorte que, pendant la collecte le long d'une partie inférieure de la trajectoire de collecte (149 ; 249), la distance entre l'axe de pivotement et le tas (123 ; 223) diminue avec la distance de la tête de collecte d'ensilage (12 ; 112 ; 212 ; 512 ; 612) à partir d'une extrémité supérieure de la face frontale du tas.

14. Procédé pour collecter de l'ensilage ou du fourrage à partir d'une face frontale d'un tas d'ensilage (123 ; 223) comprenant les étapes suivantes :
le déplacement d'une tête de collecte d'ensilage (12 ; 112 ; 212 ; 512 ; 612) avec une composante de direction verticale le long d'une face frontale (124 ; 224 ; 624) du tas (123 ; 223) en faisant pivoter une flèche (11 ; 111 ; 211 ; 311 ; 411 ; 511 ; 611) portant la tête de collecte d'ensilage au niveau de son extrémité distale vers un axe de pivot horizontal (14 ; 114 ; 214 ; 314 ; 414 ; 514 ; 614) transversal par rapport à la flèche au niveau de ou à proximité d'une extrémité proximale de la flèche, collectant ainsi l'ensilage de la face frontale du tas ; et
lorsque l'ensilage est coupé :
la réception de l'ensilage coupé dans la tête de collecte d'ensilage ;
l'avancée de l'ensilage coupé reçu de la tête de collecte d'ensilage jusqu'à un transporteur d'ensilage (113) s'étendant dans la direction longitudinale dans ou le long de la flèche ; et
l'éloignement de la tête de collecte d'ensilage par le transporteur d'ensilage (113) de l'ensilage coupé et l'approvisionnement de l'ensilage coupé vers un réceptacle (3 ; 103 ; 203 ; 603) ;
**caractérisé par** l'étape consistant à déplacer l'axe de pivotement (14 ; 114; 214; 314; 414; 514; 614) pendant la collecte entre une première position et une deuxième position, alors que l'ensilage fourni par le transporteur (113) est déposé dans le réceptacle (3 ; 103 ; 203 ; 603).

15. Procédé selon la revendication 14, dans lequel la distance entre l'axe de pivotement (14 ; 114 ; 214 ; 314 ; 414 ; 514 ; 614) et le tas (123 ; 223) augmente et diminue selon une relation prédéterminée en fonction de l'orientation de la flèche (11 ; 111 ; 211 ; 311 ; 411 ; 511 ; 611).
